# EUROPEAN PATENT SPECIFICATION

(11) **EP 0 534 558 B1**
(45) Date of publication and mention of the grant of the patent: **15.02.1995**
(21) Application number: 92202925.1
(22) Date of filing: 23.09.1992
(51) Int. Cl.: B65G 65/00

(54) **Device for loading and unloading egg containers**
Vorrichtung zum Laden und Entladen von Eierbehältnissen
Dispositif pour charger et décharger des récipients d'oeufs

(30) Priority: 26.09.1991 NL 9101633
(43) Date of publication of application: 31.03.1993
(73) Proprietor: FPS Food Processing Systems B.V., NL-3771 VE Barneveld (NL)
(72) Inventor: Kerkhof, Martinus Wilhelmus Johannes, NL-5492 VW Sint-Oedenrode (NL)
(74) Representative: van Loon, C.J.J.

(56) References cited:
- EP-A- 0 369 547
- WO-A-83/03813
- FR-A- 2 618 132
- GB-A- 2 106 070
- GB-A- 2 211 811
- US-A- 4 929 140

## Description

The invention relates in the first instance to a device for loading an egg container with stacks of filled egg trays, which container consists of a number of shelves supported above each other in a frame, each shelf being intended to accommodate six stacks of egg trays.

In modern poultry farms, many tens of thousands of eggs are produced daily. These are usually supplied on a conveyor belt and placed automatically on egg trays. The egg trays are stacked, in a different automatic device, with at least six trays to a stack. Finally, the trays have to be placed in a container. Hitherto, this loading of an egg tray container has been carried out manually. In view of the fact that the conveyance of the eggs, the loading of the trays and the stacking of the trays are completely automated and that the loading of an egg tray container is monotonous and fairly laborious work, said manual loading presents a considerable drawback.

The object of the invention is to overcome this disadvantage and to provide a device by means of which stacks of trays filled with eggs can be stacked and destacked completely automatically in to and from an egg tray container. One problem arising in this connection, which is solved by the invention, is that the frame of the container has L-shaped vertical corner profile sections, which prevent six stacks of egg trays from being able to be slid simultaneously on to a shelf of a container.

The stacking device is defined by the features of claim 1, whereas claim 8 is related to the definition of the disclosed destacking device.

Preferred embodiments of said devices are defined in the sub claims.

The invention will now be described in more detail with the aid of the figures, which illustrate an exemplary embodiment of a loading device and an exemplary embodiment of an unloading device.

Figure 1 shows a view in perspective of a device for loading an egg container.

Figure 2 shows a view in perspective of the rear side of a spreading device to be used in the device shown in Figure 1.

Figure 3 shows a view in perspective of the drive device of the spreading device.

Figure 4 shows a view in perspective of the actual spreading element of the spreading device.

Figure 5 shows a plan view in a first position.

Figure 6 shows a plan view in a second position.

Figure 7 shows a diagrammatic view, in perspective, of a device for unloading an egg container.

Figure 8 shows a plan view, in a first position, of the device shown in Figure 7.

Figure 9 shows a plan view of a second position.

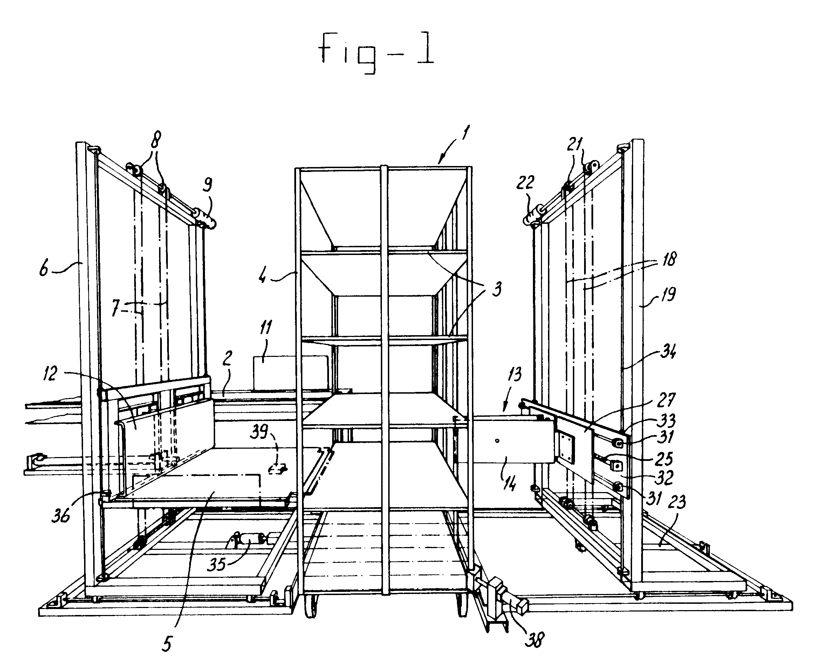

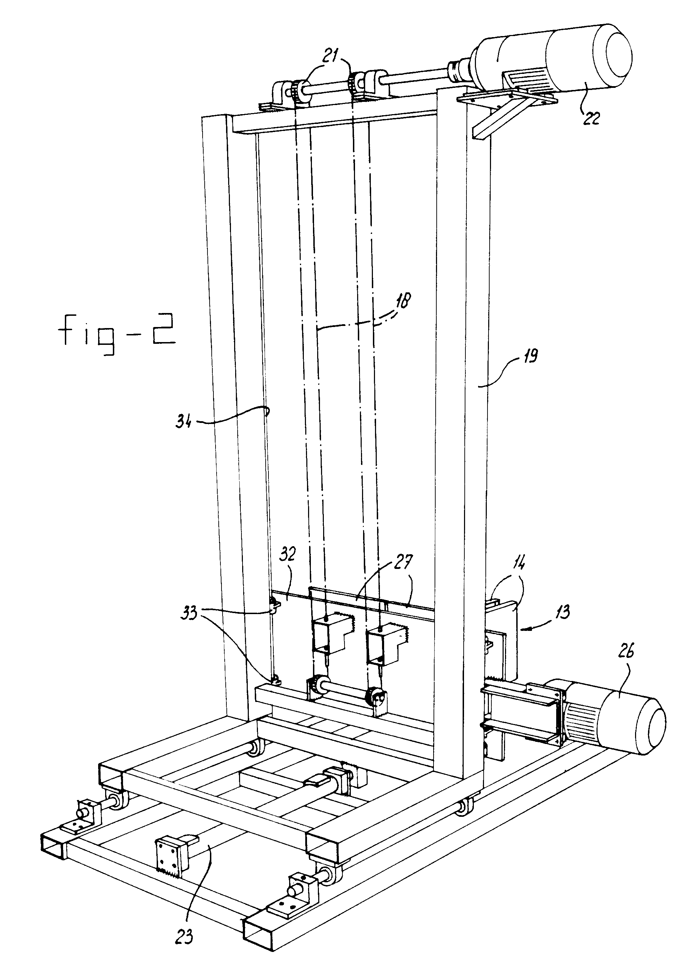

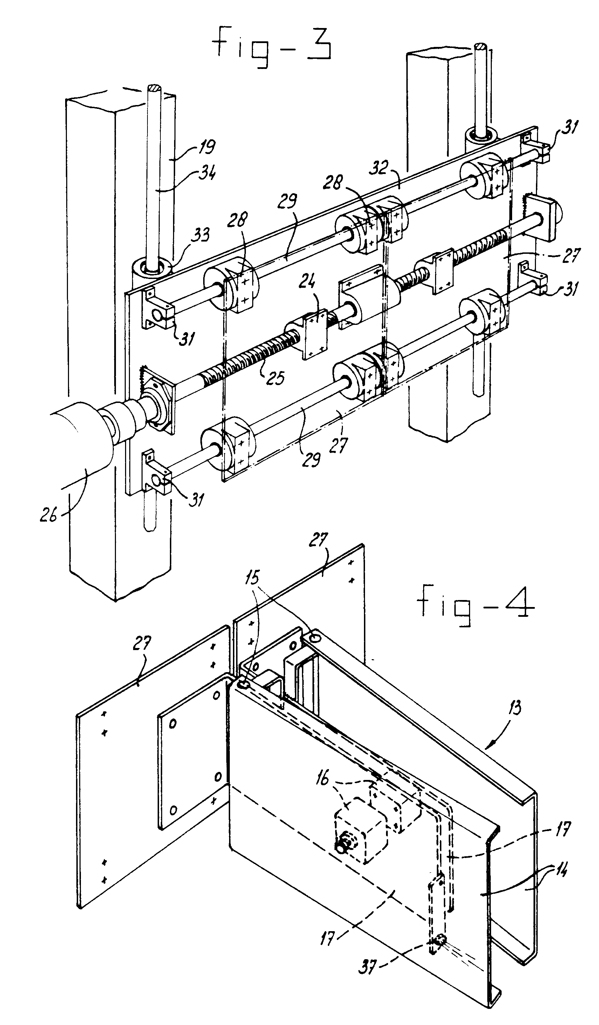

The device illustrated in Figures 1 to 6 is employed for loading a movable egg container 1 with stacks of filled egg trays. Each stack comprises, for example, six trays and is fed via a conveyor 2. The egg container 1 consists of a number of shelves 3 supported above each other in a frame. At the corners, the frame possesses vertical posts 4 in the shape of an L-profile section. Each shelf can support six stacks of filled egg trays. These are arranged in pairs.

The device comprises a collection table 5 which is suspended from a gantry 6 by means of chains 7. These run over chain wheels 8 which can be driven by a motor 9 in order to move the collection table 5 upwardly or downwardly.

The feed conveyor 2 terminates directly adjacent of the collection table 5 and when two stacks of filled egg trays have arrived at the end of the conveyor 2 and the collection table has been brought to the level of the conveying surface of the conveyor 2, the two stacks can be pushed on to the table 5 by means of a pushing device (pneumatic, hydraulic, mechanical).

One problem is that it is not possible to slide six stacks of filled egg trays simultaneously from the table 5 onto a shelf 3 of the container, since the vertical L-profile sections 4 of the frame of the container form an obstruction.

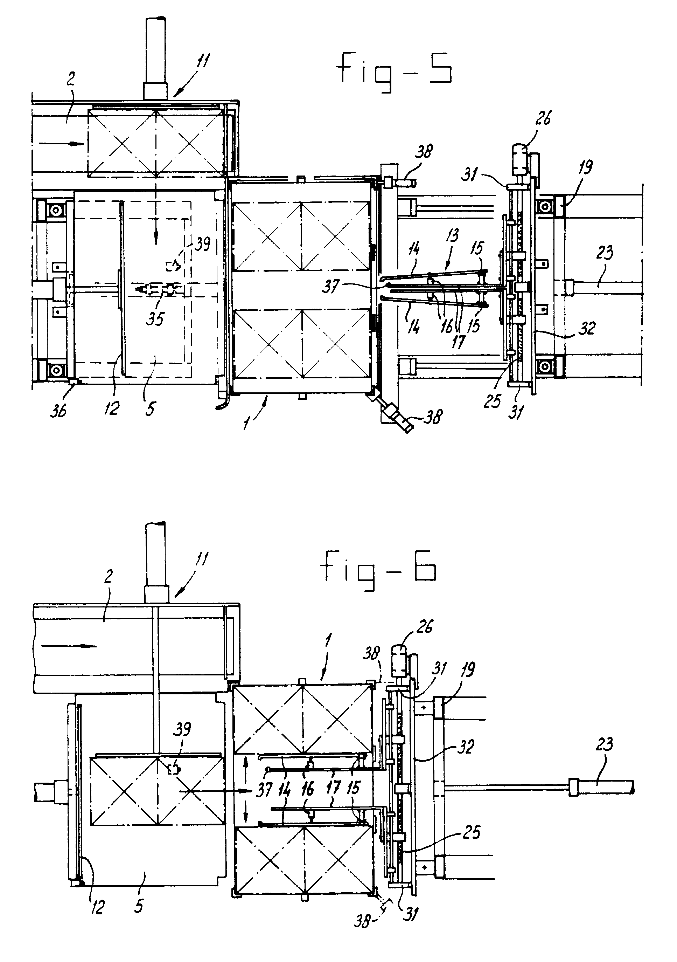

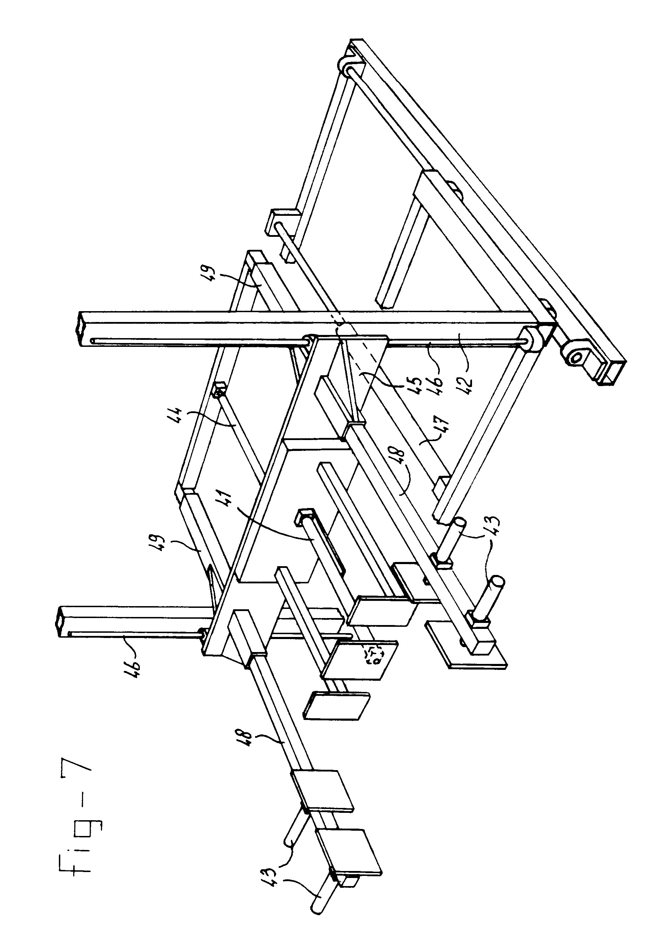

According to the invention, this problem could be solved by moving a first pair of stacks into the container, moving the container to a position in which said pair is located near a short side of the container, moving a second pair of stacks into the container and moving the container to a position in which said second pair is located near the opposite short side and finally moving a third pair of stacks in the space between the first and second stacks. In the present embodiment, however, the following sequence for loading a container shelf is employed: firstly, two pairs of filled stacks of trays, with some distance between them, are pushed, by means of the pushing device 11 onto the table 5 and from this table 5, by means of a pushing device 12 onto the corresponding shelf 3 (see Figure 5); the two pairs of stacks of trays are then pushed away from each other by means of a spreading element 13 until the stacks stand at the transverse edges said shelf (Figure 6), and finally two stacks of trays, supplied in the meantime on the table 5, are slid into the space between the two stacks which have been pushed away from each other (Figure 6).

The spreading element 13 comprises two insertion plates 14 which can be swivelled about a vertical swivelling spindle 15. By means of two pneumatic or hydraulic small cylinders 16, which are each mounted between a fixed plate 17 and an insertion plate 14, the insertion plates can be swivelled from the position shown in Figure 5, in which they converge towards each other, to the position shown in Figure 6, in which they run parallel to each other. In the position shown in Figure 5, the insertion plates 14 can be easily introduced into the space between two pairs of stacks of trays on a container shelf 3.

The insertion element 13 is also suspended, by means of chains 18, from a gantry 19. These chains run over chain wheels 21, which can be driven by a motor 22 in order to move the insertion element 13 upwardly or downwardly. The gantry 19 can be moved to and fro in a horizontal direction by a pneumatic or hydraulic cylinder 23.

To enable the plates 14 of the spreading element 13 to be moved away from each other and towards each other, each of the plates 14 is attached to a nut 24 mounted on a threaded spindle 25 which can be driven by a motor 26. The direction of the screw thread is different for the one nut and for the other nut. Furthermore, a plate 27 is attached to each of the plates 14, said plate 27 being in turn attached to sliding pieces 28 which are mounted on guide rods 29. These guide rods 29 are fitted in brackets 31 projecting from a plate 32 which, on the rear side, is provided with tubes 33 through which run guide rods 34.

The gantry 6 of the collection table 5 can be moved horizontally over a relatively small distance by means of a pneumatic or hydraulic cylinder 35. With the aid of this cylinder 35, after the correct vertical position with respect to a container shelf 3 has been determined, the table 5 can be moved towards said shelf, whereby a longitudinal edge of the table 5 comes to rest on a longitudinal edge of the corresponding shelf. Stacks of filled trays can thus be slid from the table 5 on to the shelf 3 without difficulty. In order to determine the correct position of the table 5 with respect to a shelf 3, a sensor 39 is fitted under the table 5.

A sensor 37 is attached to the spreading element 13, for determining the correct position of the spreading element with respect to a container shelf 3. After the spreading element has been introduced into the space between two pairs of stacks of egg trays, by employing the cylinder 23, both the two cylinders 16 and the motor 26 are actuated, whereby the plates 17 of the spreading element attain the position shown in Figure 6, where the pairs of stacks of trays engage approximately the L-shaped profile sections 4 of the frame. A subsequent pair of stacks of trays is then pushed, by the pushing device 12, into the space between those stacks of trays which have been pushed away from each other.

In order to receive new stacks, the collection table 5 always returns to the level of the upper surface of the conveyor 2.

The container 1 is secured, at the beginning of loading, by a sensor 36 which is fixed with the aid of two pneumatic or hydraulic clamps 38.

The vertical and horizontal movement of the table 5, the vertical and horizontal movement of the spreading element 13, and the movement of the pushing device 11 are controlled with the aid of an electronic control device (not shown), the sensors 39 and 37 always ensuring the desired vertical position of the table 5, and of the spreading element 14, with respect to the successive shelves of a container.

After the shelves of a container have been loaded, the clamps 38 are unlocked manually or automatically and the loaded container is replaced by an empty container.

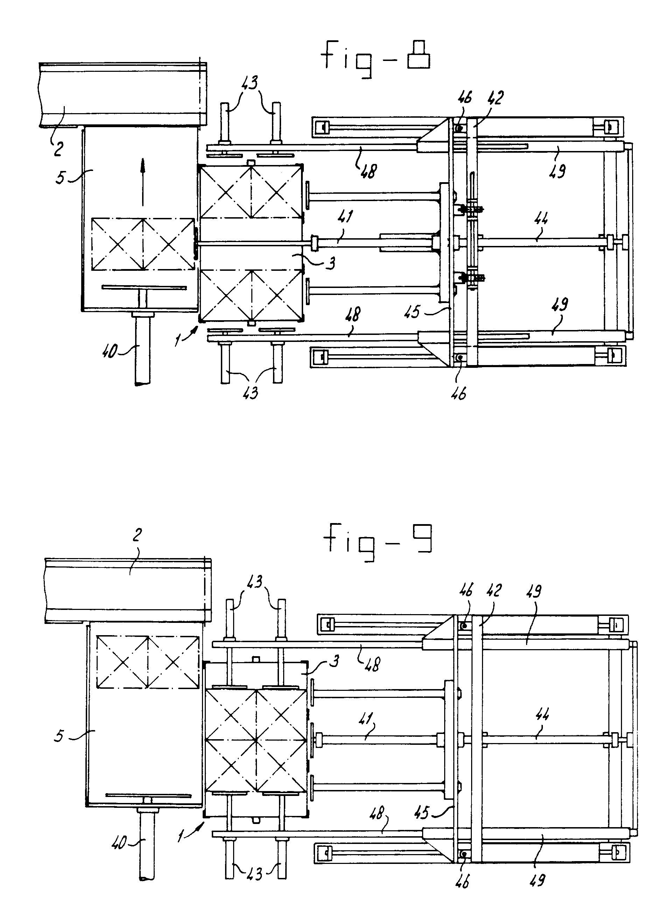

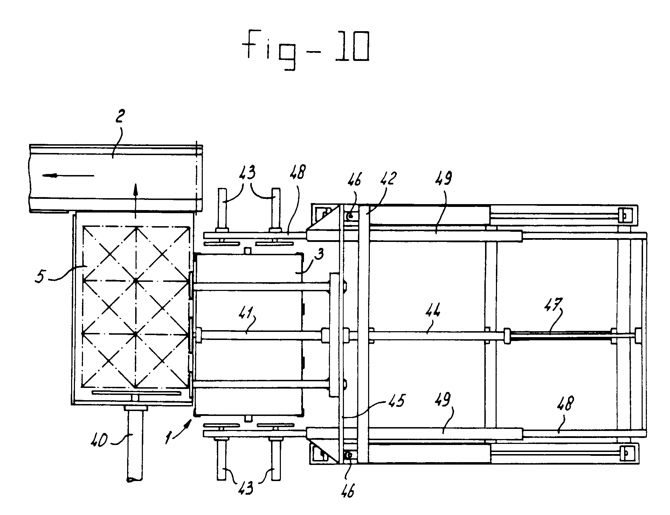

The device shown in Figures 7 to 10 is suitable for unloading a container 1 loaded with stacks of filled egg trays. In fact, this device works in reverse sequence with respect to the loading device: firstly, the middle pair of three pairs of stacks of trays placed on a container shelf 3 is pushed onto a table 5 (Figure 8) by means of a pneumatic or hydraulic pushing device 41; these stacks are moved in the direction of a discharge conveyor 2 by means of a pushing device 40. The remaining two pairs of stacks of trays are then moved towards each other by pushing devices 43 and the resulting square of stacks is pushed by the pushing device 44 on to the table 5. After the table 5 has been brought to the level of the upper surface of the conveyor 2, the three pairs of stacks are finally pushed successively onto the conveyor 2 by means of the pushing device 40.

The pushing device 41 is connected to a plate 45 which, led through bars 46 by means of chains (not shown), can be moved upwardly and downwardly along legs 42 of a gantry. The pushing devices 43 are connected to a U-frame 48 which, led in tubes 49, can be moved in a horizontal direction by means of pushing device 44. The legs 42 form part of a gantry which can be moved to and fro by the pushing device 47. The correct vertical position with respect to a selected container shelf will be determined by sensors (not shown).

The pushing device 40 is connected to the table 5 which can be moved upwardly and downwardly by driven chains in the same way as in the case of the loading device shown in Figures 1 to 6 inclusive.

The collection table will again be provided with pushing means comparable with the pushing means 35, in order to push the table towards the container in such a way that an edge thereof engages below an edge of a container shelf. In this case too, a sensor comparable with the sensor 36 is used to determine the correct vertical position of the table 5 with respect to a container shelf.

## Claims

1. Device for loading an egg container (1) with stacks of filled egg trays, the container consisting of a number of shelves (3) supported above each other in a frame, each shelf supporting stacks of egg trays arranged in a layer of three parallel rows, the device comprising:
- a collection table (5),
- means (7-9) for moving the collection table in a vertical direction to the different levels of the container shelves,
- means (12) for transferring the stacks of egg trays from the collection table to the container,
- means (14) for spacing two rows of stacks of egg trays transferred into the container so that each of said rows is positioned near one short side of the container, thus providing a space between said opposite rows and enabling the subsequent insertion of the third row of stacks by said transfer means (12), said spacing means (14) being displaceable in the vertical direction with respect to the container.

2. Device according to claim 1, characterized in that said spacing means comprises spreading plates (14) for sliding two rows of stacks of egg trays, deposited on a container shelf, away from each other towards said short sides of the container.

3. Device according to claim 2, characterized by clamping devices (38) to securely hold the egg container.

4. Device according to claims 2 or 3, characterized by means for moving the collection table in a horizontal direction with respect to the container until one edge of said table rests on a side edge of a selected container shelf, and by a sensor determining a vertical position of the collection table with respect to a selected container shelf.

5. Device according to one of the claims 2-4, characterized in that the spreading plates (14) comprise two vertically disposed plates arranged adjacent to each other, each of which is connected to a nut (24) mounted on a driven threaded spindle (25).

6. Device according to claim 5, characterized in that each of the two plates is swivellably mounted on a vertical axis (15) between a first position in which said plates converge towards each other, and a second position in which said plates extend parallel to each other, means being provided for swivelling the insertion plates between the said first and second positions.

7. Device according to any of the claims 2-6, characterized in that a sensor (37) is provided at said plates to determine a vertical position of said spreader plates, with respect to a sensed horizontal height position of a container shelf, such that the spreading plates are displaceable in a horizontal direction between two opposite rows of stacks of egg trays.

8. Device for unloading a container loaded with stacks of filled egg trays, said container consisting of a number of shelves supported above each other in a frame, each shell supporting six stacks of egg trays arranged in a layer of three parallel rows, the device comprising;
- a collection table (5) for supporting said stacks of egg trays,
- means (7-9) for moving the collection table in a vertical direction to the different levels of the container shelves,
- means (41) for pushing the middle row of said three parallel rows of stacks from a container shelf onto said collection table,
- means (43) for bringing the remaining opposite outer rows into abutting position on said container shelf,
- means (41) for pushing said abutting two rows of stacks from said shelf onto said collection table, and
- means (40) for transferring said rows from the collection table onto an exit conveyor in a direction transverse to the direction in which the means operate which push stacks from a container shelf on to the collection table,
- said pushing means (41) being vertically displaceable with respect to the container.

9. Device according to claim 8, characterized by clamping devices (38) to securely hold the egg container.

10. Device according to claims 8 or 9, characterized by means for moving the collection table in a horizontal direction with respect to the container until an edge of said table engages below the edge of a container shelf, and by a sensor (39) determining a vertical position of the collection table with respect to a container shelf, such that the said edge of the table comes into position just below the said edge of a container shelf.

## Patentansprüche

1. Vorrichtung zum Beladen eines Eierbehälters (1) mit Stapeln gefüllter Eiertabletts, wobei der Behälter aus einer Anzahl von übereinander in einem Rahmen gestützten Regalen (3) besteht und jedes Regal in einer Schicht aus drei parallelen Reihen angeordnete Eiertablettstapel stützt, wobei die Vorrichtung folgendes umfaßt:
- einen Sammeltisch (5),
- Mittel (7-9) zum Bewegen des Sammeltisches in vertikaler Richtung in die verschiedenen Höhen der Behälterregale,
- ein Mittel (12) zum Befördern der Eiertablettstapel von dem Sammeltisch zum Behälter,
- ein Mittel (14) zum Beabstanden zweier Reihen Eiertablettstapel, die in den Behälter befördert wurden, so daß sich jede der Reihen in der Nähe einer kurzen Behälterseite befindet, wodurch ein Abstand zwischen den gegenüberliegenden Reihen gebildet und das anschließende Einsetzen der dritten Stapelreihe durch das Beförderungsmittel (12) ermöglicht wird, wobei das Beabstandungsmittel (14) in vertikaler Richtung gegenüber dem Behälter verschiebbar ist.

2. Vorrichtung nach Anspruch 1, dadurch gekennzeichnet, daß das Beabstandungsmittel Spreizplatten (14) umfaßt, um zwei Reihen Eiertablettstapel, die auf einem Behälterregal abgesetzt wurden, zu den kurzen Seiten des Behälters hin auseinanderzuschieben.

3. Vorrichtung nach Anspruch 2, gekennzeichnet durch Klemmvorrichtungen (38) zum sicheren Halten des Eierbehälters.

4. Vorrichtung nach Anspruch 2 oder 3, gekennzeichnet durch Mittel zum Bewegen des Sammeltisches in horizontaler Richtung gegenüber dem Behälter, bis eine Kante des Tisches auf einer Seitenkante eines ausgewählten Behälterregals aufliegt, und durch einen Sensor, der eine vertikale Position des Sammeltisches gegenüber einem ausgewählten Behälterregal bestimmt.

5. Vorrichtung nach einem der Ansprüche 2 - 4, dadurch gekennzeichnet, daß die Spreizplatten (14) zwei vertikal und nebeneinander angeordnete Platten umfassen, die jeweils mit einer auf einer getriebenen Gewindespindel (25) befestigten Mutter (24) verbunden sind.

6. Vorrichtung nach Anspruch 5, dadurch gekennzeichnet, daß jede der beiden Platten auf einer vertikalen Achse (15) schwenkbar zwischen einer ersten Position, in der sich die Platten einander nähern, und einer zweiten Position, in der sich die Platten parallel zueinander erstrecken, befestigt ist, wobei Mittel zum Schwenken der Einsetzplatten zwischen der ersten und zweiten Position vorgesehen sind.

7. Vorrichtung nach einem der Ansprüche 2 - 6, dadurch gekennzeichnet, daß an den Platten ein Sensor (37) zur Bestimmung einer vertikalen Position der Spreizplatten gegenüber einer erfaßten horizontalen Höhenposition eines Behälterregals vorgesehen ist, so daß die Spreizplatten in horizontaler Richtung zwischen zwei gegenüberliegenden Reihen Eiertablettstapel verschiebbar sind.

8. Vorrichtung zum Entladen eines mit Stapeln gefüllter Eiertabletts geladenen Behälters, der aus einer Anzahl von übereinander in einem Rahmen gestützten Regalen besteht, wobei jedes Regal sechs Stapel in einer Schicht aus drei parallelen Reihen angeordnete Eiertabletts stützt, wobei die Vorrichtung folgendes umfaßt:
- einen Sammeltisch (5) zum Stützen der Eiertablettstapel,
- Mittel (7-9) zum Bewegen des Sammeltisches in vertikaler Richtung in die verschiedenen Höhen der Behälterregale,
- Mittel (41) zum Schieben der mittleren Reihe der drei parallelen Stapelreihen aus einem Behälterregal auf den Sammeltisch,
- Mittel (43), um die verbleibenden gegenüberliegenden äußeren Reihen in aneinanderstoßende Position auf dem Behälterregal zu bringen,
- Mittel (41) zum Schieben der aneinanderstoßenden beiden Stapelreihen von dem Regal auf den Sammeltisch und
- Mittel (40) zum Befördern der Reihen vom Sammeltisch auf eine Ausgangsfördereinrichtung in einer quer zu der Richtung, in der die Mittel arbeiten, die Stapel von einem Behälterregal auf den Sammeltisch schieben, liegenden Richtung,
- wobei die Schiebemittel (41) vertikal gegenüber dem Behälter verschiebbar sind.

9. Vorrichtung nach Anspruch 8, gekennzeichnet durch Klemmvorrichtungen (38) zum sicheren Halten der Eierbehälter.

10. Vorrichtung nach Anspruch 8 oder 9, gekennzeichnet durch Mittel zum Bewegen des Sammeltisches in horizontaler Richtung gegenüber dem Behälter, bis eine Kante des Tisches die Kante eines Behälterregals untergreift, und durch einen Sensor (39), der eine vertikale Position des Sammeltisches gegenüber einem Behälterregal bestimmt, so daß die Kante des Tisches direkt unter der Kante eines Behälterregals positioniert wird.

## Revendications

1. Dispositif pour charger un réceptacle (1) destiné à des oeufs, avec des piles de plateaux remplis d'oeufs, le réceptacle étant constitué par un certain nombre d'étagères (3) supportées en superposition mutuelle dans un cadre, chaque étagère supportant des piles de plateaux d'oeufs étant arrangée en une couche de trois rangées parallèles, le dispositif comprenant :
- une table de réception (5),
- des moyens (7-9) pour déplacer la table de réception en direction verticale jusqu'aux différents niveaux des étagères de réceptacle,
- des moyens (12) pour transférer les piles de plateaux d'oeufs de la table de réception au réceptacle,
- des moyens (14) pour écarter deux rangées de piles de plateaux d'oeufs transférées dans le réceptacle de telle sorte que chacune desdites rangées est positionnée à proximité du petit côté du réceptacle, procurant ainsi un espace entre lesdites rangées opposées et permettant l'insertion ultérieure de la troisième rangée de piles à l'intervention dudit moyen de transfert (12), ledit moyen d'écartement (14) étant apte à se déplacer en direction verticale par rapport au réceptacle.

2. Dispositif selon la revendication 1, caractérisé en ce que lesdits moyens d'écartement comprennent des plaques de distribution (14) pour écarter l'une de l'autre, par glissement, deux rangées de piles de plateaux d'oeufs déposées sur une étagère de réceptacle, en direction desdits petits côtés du réceptacle.

3. Dispositif selon la revendication 2, caractérisé par des dispositifs de serrage (38) pour maintenir fixe le réceptacle destiné à des oeufs.

4. Dispositif selon la revendication 2 ou 3, caractérisé par des moyens pour déplacer la table de réception en direction horizontale par rapport au réceptacle jusqu'à ce qu'un bord de ladite table s'appuie sur un bord latéral d'une étagère de réceptacle sélectionnée, et par un détecteur déterminant une position verticale de la table de réception par rapport à une étagère de réceptacle sélectionnée.

5. Dispositif selon l'une quelconque des revendications 2-4, caractérisé en ce que les plaques de distribution (14) comprennent deux plaques disposées en position verticale, arrangées pour être mutuellement adjacentes, chacune étant reliée à un écrou (24) monté sur une broche filetée entraînée (25).

6. Dispositif selon la revendication 5, caractérisé en ce que chacune des deux plaques est montée en pivotement sur un axe vertical (15) entre une première position dans laquelle lesdites plaques convergent l'une vers l'autre et une seconde position dans laquelle lesdites plaques s'étendent parallèlement l'une à l'autre, des moyens étant prévus pour faire pivoter les plaques d'insertion entre lesdites première et seconde positions.

7. Dispositif selon l'une quelconque des revendications 2-6, caractérisé en ce qu'on prévoit un détecteur (37) à l'endroit desdites plaques pour déterminer une position verticale desdites plaques de distribution par rapport à une position horizontale en hauteur détectée d'une étagère de réceptacle, de telle sorte que les plaques de distribution peuvent se déplacer en direction horizontale entre deux rangées opposées de piles de plateaux d'oeufs.

8. Dispositif pour décharger un réceptacle chargé de piles de plateaux remplis d'oeufs, ledit réceptacle étant constitué par un certain nombre d'étagères supportées en superposition mutuelle dans un cadre, chaque étagère supportant six piles de plateaux d'oeufs en une couche de trois rangées parallèles, le dispositif comprenant :
- une table de réception (5) pour supporter lesdites piles de plateaux d'oeufs,
- des moyens (7-9) pour déplacer la table de réception en direction verticale jusqu'aux différents niveaux des étagères de réceptacle,
- des moyens (41) pour pousser la rangée centrale desdites trois rangées parallèles de piles, depuis une étagère de réceptacle sur ladite table de réception,
- des moyens (43) pour amener les rangées externes opposées restantes en position bout à bout sur ladite étagère de réceptacle,
- des moyens (41) pour pousser lesdites deux rangées de piles disposées bout à bout, depuis ladite étagère sur ladite table de réception, et
- des moyens (40) pour transférer lesdites rangées de la table de réception sur un transporteur de sortie dans une direction transversale à la direction de mise en service des moyens qui poussent les piles depuis une étagère de réceptacle sur la table de réception,
- lesdits moyens de poussée (41) étant aptes à se déplacer verticalement par rapport au réceptacle.

9. Dispositif selon la revendication 8, caractérisé par des dispositifs de serrage (38) destinés à maintenir fixe le réceptacle destiné à des oeufs.

10. Dispositif selon la revendication 8 ou 9, caractérisé par des moyens pour déplacer la table de réception en direction horizontale par rapport au réceptacle jusqu'à ce qu'un bord de ladite table vienne se mettre en contact en dessous du bord d'une étagère de réceptacle, et par un détecteur (39) déterminant une position verticale de la table de réception par rapport à une étagère de réceptacle, de telle sorte que ledit bord de la table vient se mettre dans une position située juste en dessous dudit bord d'une étagère de réceptacle.
